**Europäisches Patentamt**

**European Patent Office**

**Office européen des brevets**

(11) Publication number: **0 173 986**
**A2**

# (12) EUROPEAN PATENT APPLICATION

(21) Application number: 85110986.8

(22) Date of filing: 30.08.85

(51) Int. Cl.⁴: **G 10 L 5/06**

(30) Priority: 03.09.84 IT 6787184

(43) Date of publication of application:
12.03.86 Bulletin 86/11

(84) Designated Contracting States:
DE FR GB NL SE

(71) Applicant: CSELT Centro Studi e Laboratori
Telecomunicazioni S.p.A.
Via Guglielmo Reiss Romoli, 274
I-10148 Turin(IT)

(72) Inventor: Colombo, Maura
P. za Adriano, 9
Torino(IT)

(72) Inventor: Pirani, Giancorlo
C.so Mediterraneo, 140
Torino(IT)

(74) Representative: Riederer Freiherr von Paar zu Schönau,
Anton et al,
Freyung 615 Postfach 2664
D-8300 Landshut(DE)

(54) **Method of and device for the recognition, without previous training of connected words belonging to small vocabularies.**

(57) The method consists in classifying the sounds forming the uttered words into eight phonetic classes plus a possible indication of the presence of diphtongs, starting from an acoustic-phonetic analysis of the sounds themselves.

To recognize the uttered words the sequence of classes found out are analyzed by search-tree algorithms of pattern matching with sequences of classes corresponding to vocabulary words, and possibly by dynamic programming algorithms.

The detected classes are: silence, voiced fricatives unvoiced fricatives, plosives, affricates, nasals, semivowels, vowels.

A device for implementing the method is also described.

EP 0 173 986 A2

./...

FIG. 1

PATENTANWÄLTE

Dipl.-Ing. Anton Freiherr
Riederer von Paar
D-8300 Land**0173986**
Postfach 2664, Freyung 615
☏ Landshut (0871) 22170
Fax (CCITT 2) manuell
Telex 58441 glala d

Frhr. Riederer v. Paar, Postfach 2664, D-8300 Landshut

Partner in München:
Dr. H. O. DIEHL
☏ München (089) 177061
Fax (089) 177461 (autom.)
Telex 5215145 Zeus d

CSELT

Centro Studi e Laboratori

Telecomunicazioni S.p.A.

Turin, Italy

Method of and Device for the Recognition, without Previous Training,
of Connected Words Belonging to Small Vocabularies

## 1  Description

The present invention relates to speech recognition systems, and more particularly it concerns a method of and device for recognizing, without previous training, connected words belonging to small vocabularies.

Speech recognition can be faced either by means of a pattern matching approach, or by means of an acoustic-phonetic analysis.

The pattern matching approach is based on a previous storage of speaker dependent templates characterising overall acoustical events to be recognized; and on the subsequent matching with the speech signal to be recognized. The main disadvantage of this approach is that templates storage requires an initial training phase which may be either on-line (in case of speaker-dependent recognition) or offline (in case of speaker-independent recognition) which is very time-consuming and obviously requires high memory occupancy.

On the contrary, acoustic-phonetic recognition is based on the detailed determination of the acoustic-phonetic features of the speech signal without requiring any previous storage of reference templates.

This technique is generally used for large-vocabulary isolated-word recognition as a preliminary analysis, to simplify the subsequent pattern matching phase; or is used in the continuous speech understanding domain as a preliminary analysis for classifying the sounds into fundamental phonetic classes, useful to the following step of recognition of individual phonemes belonging to these classes.

An example of the latter application is described in the article by C.J.Weinstein et al., "A System for Acoustic-Phonetic Analysis of Continuous Speech", IEEE Transactions on Acoustics, Speech and Signal Processing, vol. ASSP-23, No. 1, February 1975, where the sounds are preliminarily subdivided into four fundamental phonetic classes, and afterwards hypotheses are made on the individual phonemes belonging to these classes. Phoneme hypothesis reliability is not very high because possible misinterpretations are recovered during the subsequent higher-level processing phases (lexical, syntatic, semantic interpretation).

The inventors have found that small-vocabulary, speaker-independent words recognition does not require individual phoneme detection, but it requires only an accurate subdivision into phonetic classes starting from an acoustic-phonetic word analysis; hence this subdivision is the only step of the sound classification process.

The present invention concerns a small-vocabulary word recognition method, which, on the basis of the acoustic-phonetic analysis of the uttered sounds, subdivises them into eight main classes, plus an indication of the presence of diphtongs. The class sequence is analyzed by a tree-search algorithm of pattern-matching with sequences of classes corresponding to the words of the vocabulary, and possibly by dynamic programming algorithms.

Such a method is described in claim 1.

It is a further objet of the present invention a device for implementing the method, described in claim 8. The method, object of the present invention, is hereinafter described.

The signal is subdivided into subsequent intervals and each interval is classified into one of the following eight phonetic classes (hereinafter labelled by symbols written on the right of each of them): silence Q, voiced fricative Fv, unvoiced fricative Fn, plosive P, affricate A, nasal N, semivowel S, vowel V (with possible diphtong detection).

A recognition method of the words forming the speech signal is applied to the obtained class sequence.

Provided the vocabulary of the words which can be recognized is conveniently chosen, the above subdivision into 8 classes is·sufficient to recognize each possible sequence of said words in a speaker-independent mode. The subdivision into eight phonetic classes is carried out as hereinbelow described.

First the speech signal is subdivided into equal time intervals and digitised, obtaining, at each interval, N digital samples $s_n (1 \leqslant n \leqslant N)$.

A linear prediction coding (LPC) is applied to the digital samples $s_n$ of each interval. In other words, at each interval, linear prediction coefficients $a_1, \ldots a_i, \ldots a_p$ of the following function are determined:

$$H(z) = \frac{1}{1 + \sum_{i=1}^{P} a_i \cdot z^{-1}} \qquad (1)$$

where $\underline{z}$ indicates digital-sample $\underline{z}$-transform, H(z) the transfer function defining the vocal tract model, at each interval by an all-pole digital filter; $P(1 \leqslant i \leqslant P)$ the digital filter order.

The values $\rho_i$ of the following normalized autocorrelation function are thus determined:

$$\rho_1 = \frac{\sum_{n=0}^{N-1-i} s_n \cdot s_{n+1}}{\sum_{n=0}^{N-1} s^2_n} \qquad (2)$$

Values $\rho_i$ are then used to resolve the following linear system of $i$ equations:

$$\sum_{k=1}^{P} a_k \cdot \rho_{i-k} = -\rho_i \qquad (3)$$

The linear-prediction coding technique is known and described in the book by L.R.Rabiner, R.W.Schafer: "Digital Processing of Speech Signals", pages 396 and ff., Englewood Cliffs, Prentice-Hall, 1978.

Normalized residual energy ER is calculated at each interval using values $a_i$, $\rho_i$ as follows:

$$E_R = 1 - \sum_{i=1}^{P} \rho_i \cdot a_i \qquad (4)$$

Further the values of the formant frequencies $F_r$, i.e. the resonance frequencies of transfer function H(z) defined by relation (1) are calculated. Values $F_r$ are given by the peaks of function H(z) calculated point-by-point and by applying known parabolic-interpolation techniques.

To ensure a sufficient continuity between the formants calculated at adjacent intervals, known formant tracking techniques are used, which replace formant values which greatly differ from those of adjacent intervals by interpolated values. These formant computing techniques are described, e.g. in the book by J.D.Markel, A.H.Gray Jr. "Linear Prediction of Speech", Berlin, Springer-Verlag, 1976, page 165 and following.

Together with the preceding operations, always using linear prediction techniques applied to low-pass-filtered digital samples $s_n$, the speech signal of each interval is classified as voiced or unvoiced, by applying the algorithm known in the technique by the acronym SIFT (Simplified Inverse Filter Tracking) which consists of the following steps:

- digital samples are low-pass filtered and then sub-sampled;

- equations (2), (3), are applied again to the sub-sampled signal, thus obtaining new $\rho_i$, $a_i$ values;

- the sub-sampled signal is further digitally filtered according to the inverse transfer function referred to as inverse filter of relation (1), and using the just-computed coefficients $a_i$, thus obtianing the residual signal $r_x$, with x identifying the sample of sub-sampled digital signal $(1 \ll x \ll M)$,

- the autocorrelation function $R_x$ of residual signal $r_x$ is computed:

$$Rx = \sum_{K=1}^{M-1-x} r_x \cdot r_{x-k} \qquad (5)$$

- $R_x$ peaks are looked for and compared with a threshold;

- a signal SF is generated indicating "threshold exceeded" if at least one of said that peaks of $R_x$ exceeds threshold; "threshold exceeded" refers to a voiced sound, the opposite to an unvoiced.

The algorithm is of known type, as described e.g. in the above-cited book by J.D.Markel, A.H.Gray, page 197 and following.

Together with the preceding operations, fast Fourier transform is computed of the digital signals $s_n*$ of each interval, to determine the following energy values referred to an interval:

- total energy $E_T$ extended to overall frequency band of the original signal;

- energy $E_M$ of the intermediate band;

- energy $E_H$ of high frequencies;

- energy $E_L$ of low frequencies.

Then each interval is classified as silence Q or voice by applying the following algorithm:

- a reference energy value is calculated

$E_{RIF} = \alpha (E_T - \overline{E_{TI}})$, where $E_T$ is the total energy, $\overline{E_{TI}}$ is the initial mean total energy extended to the first five intervals considered, which hence takes into account background noise, and $\alpha$ is a constant factor;

- residual energy $E_R$ is compared with $E_{RIF}$: if $E_R > E_{RIF}$ the interval is classified as silence Q.

Ratio $R = E_L/E_H$ between the energy at low and high frequencies is calculated and then compared with a threshold. Then a subdivision is effected into four levels indicating the voicing degree of the speech signal at each interval, starting from the analysis of signal SF, and ratio R, according to the following table:

| R | SF | Speech-signal voicing degree |
|---|---|---|
| Threshold exceeded | Threshold exceeded | Voiced signal |
| " " | " not " | Quasi " " |
| " not " | " exceeded | Quasi unvoiced signal |
| " " " | " not " | Unvoiced " |

Starting from the energy at high frequencies of the preceding interval $E_H(j-1)$ and of the subsequent interval $E_H(j+1)$, the value SSF(j) is computed of the spectral stability function defined by the following formula:

$$SSF(j) = \frac{\left| 10 \log E^\delta_H(j+1) - 10 \log E^\delta_H(j-1) \right|}{\varepsilon + \left| 10 \log E^\delta_H(j+1) + 10 \log E^\delta_H(j-1) \right|} \qquad (6)$$

where j is the interval index; $\varepsilon$ and $\delta$ are two constants.

Value SSF(j) is compared with a threshold and the intervals at which the threshold is exceeded are considered as the start points of sounds such as Fv, Fn, P, A.

In a limited neighborhood j-N, j+N of each of said intervals

- 7 -            0173986

taken as references and denoted by index j, a check procedure is effected to establish which of the following conditions has taken place:

- most of the previous intervals $(j-1,..j-N)$ have been classified as

    a) silence Q

    b) voiced or quasi voiced (signal VNV)

- most of the subsequent intervals $(j+1,....j+N)$ have been classified as:

    c) unvoiced or quasi unvoiced

    d) voiced or quasi voiced

    e) quasi voiced or quasi unvoiced

- in most of the subsequent intervals total energy $E_T$ has a value which, if compared with a threshold $E_1$, is:

    f) $E_T < E_1$

    g) $E_T > E_1$

- in interval j total energy $E_T$ has a value which, if compared with a threshold $E_2 > E_1$, is:

    h) $E_T < E_2$

    i) $E_T > E_2$

Upon the check of these conditions, the following possible indications of phonetic classes are emitted for interval j and the following:

- an indication of voiced fricative class Fv if the following conditions are met:

    a), d), h); or b), d), or a), e), h); or b), e)

- an indication of unvoiced fricative class Fn for the following conditions:

    a), c), f); or b), c)

- an indication of plosive class P for conditions:

    a), d), i); or a), e), i)

- an indication of affricate class A for conditions:

    a), c), g)

Once identified, one of said indications is maintained for a number of intervals, starting from interval j, determined as follows:

- the indication of class Fv is maintained up to the interval in which condition i) takes place again;

- the indication of class Fn is maintained up the interval in which condition d) occurs again;

- the indication of class P lasts for an only interval if it has been detected with conditions a), d), i); otherwise it is maintained for all the intervals in which conditions e) is present;

- the indication of class A is maintained up to the interval in which condition d) occurs again.

For sequences of interval not classified as Q, Fv, Fn, P, A, a search is effected for possible minimum energy values in the intermediate band $E_M$: an algorithm known in the art as "DIP search algorithm" is used as disclosed for instance in the above mentioned paper by C.J.Weinstein et al.

According to this algorithm a linear interpolation is performed among contiguous values $E_M(j)$ by a smoothing function to smooth the instantaneous peaks in the values of $E_M$, which peaks are not significant to the search for the above minima, obtaining, for said sequences of intervals, a smoothed mean energy function $E'_M(j)$.

Then the trend in time of the values $E'_M(j)$ is considered: maxima and minima are searched for, and the ratios between a minimum and each of the two adjacent maxima are calculated; if even only one of the two ratios is greater than a fixed threshold, then in the neighborhood of the interval corresponding to the minimum of $E_M$, a nasal sound N or a semivowel sound S identified.

To decide whether the sound is N or S, the duration is considered of the time interval in which the differences between the energy values and the minimum, are within a certain range. If said duration exceeds a certain threshold, in the pertaining intervals the sound is classified as N, otherwise it is classified as S. The other intervals of these sequences which are classified neither N nor S are classified as V (vowel).

If the number of consecutive intervals classified as V is greater than a threshold, a search procedure is activated for possible consecutive vowels (diphtongs).

To this aim the trends are considered, during said sequences of intervals, of the interpolated values of the lowest formant frequencies Fr.

If said trends present constant regions whose mean levels differ from one another by values greater than a threshold, each of said regions detects a vowel. The values of said levels are used then also during the word recognition step.

The method used for word recognition basically employs known algorithms, such as tree search, pattern matching and dynamic programming algorithms, as described e.g. in the paper by J.S.Bridle, R.M.Chamberlain, M.D.Brown: "An algorithm for connected word recognition", International Conference on Acoustics, Speech and Signal Processing, pp. 899-902, Paris, May 1982.

Class sequences comprised between two sufficiently long silence periods are investigated by these procedures.

Some indications of classes lasting for too small a number of consecutive intervals are eliminated in each of said class sequences. In fact, statistically, the indications of classes Fv, Fn, V, A, whose duration is too short correspond to classification errors.

Then within said sequences, equal consecutive classes are united under a single indication, with the exception of diphtongs or different consecutive vowels, for which as many consecutive indications V are maintained as are the vowels, thus obtaining reduced sequences of classes.

For example the reduced sequence $QFnV_1V_2Q$ is derived from the possible following class sequence

$$QQQQ \quad FnFnFnFnFn \quad V_1V_1V_1V_1V_1 \quad V_2V_2V_2V_2V_2 \quad QQQQQ,$$

Each reduced class-sequence $S(L)$, where L is the number of symbols, is analyzed by the pattern matching search algorithm which compares it with sequences corresponding to words of the vocabulary, till similarity is found with at least one of them: under the hyphotesis made of a limited vocabulary the sequence found out is the only one possible. If on the contrary no matching is found out, the entire reduced sequence is analyzed by applying dynamic programming algorithm which searches for an acceptable class sequence having the minimum distance from that under test. If this distance is less than a fixed threshold, the sequence is recognized as valid, otherwise it is not.

An example of limited vocabulary may be the sequence of digits (0, 1, ...., 9).

In the Italian language, for digit representation, the following graphemes pertaining to the following classes are to be used:

| Class | Graphemes |
|-------|-----------|
| Fv | z,v |
| Fn | s |
| P | d,t,q |
| A | c |
| N | n |
| S | r |
| V | a,e,i,o,u |

In addition the following correspondence is obtained between digits and reduced class sequences:

- 11 -

0173986

| Digit | | Reduced class-sequence |
|-------|---|------------------------|
| ZERO | | FvVSV |
| UNO | (one) | VNV |
| DUE | (two) | PVV |
| TRE | (three) | PSV |
| QUATTRO | (four) | PVVQPSV |
| CINQUE | (five) | AVNQPVV |
| SEI | (six) | FnVV |
| SETTE | (seven) | FnVPV |
| OTTO | (eight) | VPV |
| NOVE | (nine) | NVFvV |

If the classes are correctly identified any digit sequence can be recognized.

The only ambiguity might arise in the identification of digit sequence "due, tre" or digit "quattro": in fact in both cases there is the reduced class-sequence $PV\underline{V}QPS\underline{V}$. In this case, however, it is sufficient to check the distance between the values of formant frequencies Fr of the two underlined vowels: the distance must be below a fixed threshold in one case (du$\underline{e}$, tr$\underline{e}$), because the same vowel is present, while above the threshold in the other (qu$\underline{a}$ttr$\underline{o}$) because the vo-wels are different.

A device for implementing the described method is given hereinbelow as a non-limiting example with reference to the annexed drawings in which:

- Fig. 1 is a general block diagram of the device according to the invention;

- Fig. 2 is a circuit diagram of block SIL of Fig. 1;

- Fig. 3 is a circuit diagram of block CLSS of Fig. 1;

- Fig. 4 is a circuit diagram of block FPA of Fig. 3;

- Fig. 5 is a circuit diagram of block DUR of Fig. 3.

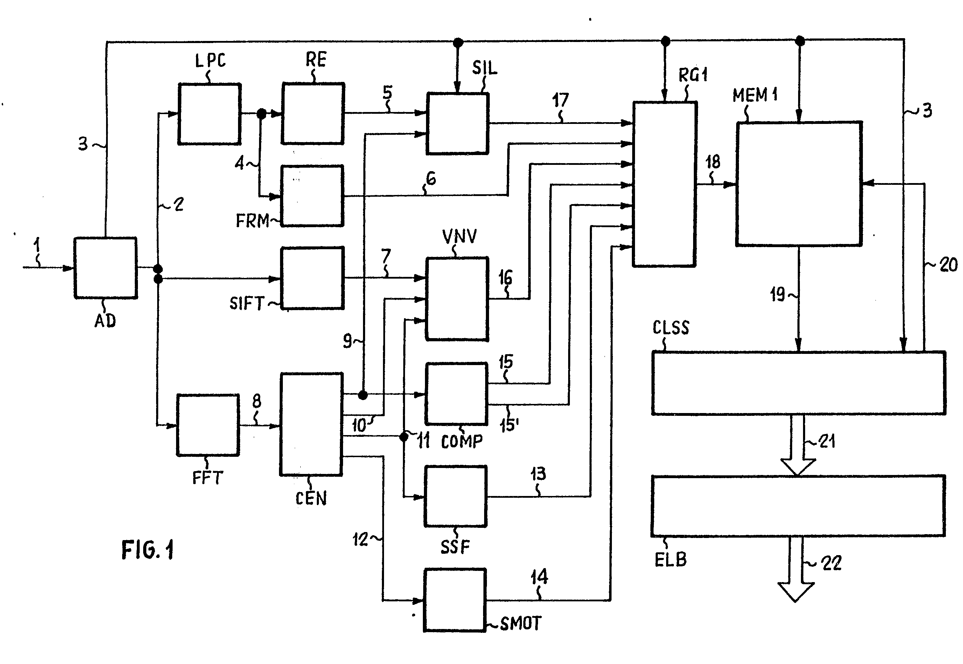

In Fig. 1 AD denotes a block which converts into digital the analog speech signal it receives on wire 1 and then subdivides it into time intervals so that each interval contains an integer number N of digital samples $s_n$ of speech signal: the samples of each interval are supplied on connection 2, while on wire 3 a reference signal at interval frequency is supplied.

LPC denotes a block which calculates values $a_1$, $\rho_1$, of formulae (2), (3) and supplies them on connection 4.

RE indicates a block which, by using values $a_i$, $\rho_i$ calculates at each interval normalized residual energy $E_R$ given by formula (4) and supplies it on connection 5.

FRM denotes a block which, at each interval, determines the values of formant frequencies Fr calculating point-by-point function (1), by using values $a_i$ it receives from connection 4. Values Fr are supplied on connection 6.

SIFT denotes a block apt to implement the homonymous algorithm of classification of the speech signal as voiced or unvoiced: SIFT receives the digital samples present on connection 2 and supplies on wire 7 signal SF indicative of "threshold exceeded".

FFT denotes a block calculating the Fast Fourier Transform of the digital samples of each interval it receives from connection 2. The transformed values are supplied through connection 8 to block CEN which calculates at each interval energy values $E_T$, $E_L$, $E_H$, $E_M$ supplied on connections 9, 10, 11, 12 respectively.

SSF denotes a block which, at each interval, calculates the value of spectral stability function (6), starting from the energy values $E_H$ it receives through connection 11. SSF emits on wire 13 a signal which, at each interval, indicates whether the computed value is below or above a fixed threshold.

SMOT denotes a block which receives the energy values of intermediate band $E_M$ present on connection 12 and performs the linear interpolation between adjacent values, i.e. the first part of the above-described "DIP" algorithm, and obtains the values of smoothed mean energy function $E'_M(j)$ then supplied on connection 14: each value

$E'_M$ is also accompanied by the possible indication of maximum or minimum point, obtained by comparing said value with the preceding and subsequent one.

The implementation of blocks LPC, RE, FRM, SIFT, FFT, CEN, SSF, SMOT is not a problem to the skilled in the art once the functions performed are known, which functions have been examined while describing the method. E.g. these blocks can be implemented by known microprogrammed structures, provided their computing rate is compatible with real-time processing requirements.

COMP denotes a block comprising two usual majority comparators comparing total energy values $E_T$ present on connection 9 with the two threshold levels $E_1$ and $E_2$ respectively.

COMP emits over wires 15 and 15' signals indicative of the result of said comparisons, according to the following correspondence between logic levels and $E_T$ values:

Logic level on wire 15 : "0"  →  $E_T < E_1$

"    "    "    "   15 : "1"  →  $E_T > E_1$

"    "    "    "   15': "0"  →  $E_T < E_2$

"    "    "    "   15': "1"  →  $E_T > E_2$

VNV denotes a block comprising a divider apt to compute ratio R between energy values $E_L$ and $E_H$ it receives through connections 10, 11 and a threshold comparator for said ratio. VNV, in addition, comprises a normal combinatory logic generating a signal with four logic levels indicating the voicing degree of the speech signal at each interval, by combining the logic levels of the output of the internal comparator and of wire 7 so as to obtain the following correspondences between logic levels on connection 16 and voicing degrees:

| Connection 16 | Voicing degree |
|---------------|----------------|
| 11 | voiced signal |
| 10 | quasi voiced    " |
| 01 | quasi unvoiced   " |
| 00 | unvoiced   " |

SIL denotes a block apt to classify as silence Q or voice each interval. SIL calculates values $E_{RIF}$ starting from the values of total energy $E_T$ which it receives from connection 9, and compares them with the values of residual energy $E_R$ present on connection 5. The comparison results are supplied on wire 17, according to the following convention: logic level "1" means silence, while "0" means voice.

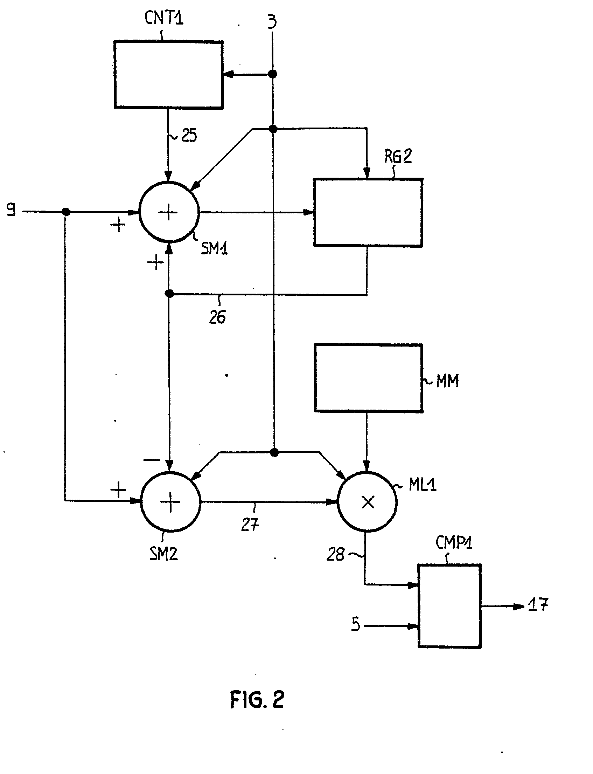

An example of embodiment of block SIL will be described with reference to Fig. 2.

RG1 denotes a common buffer register which receives the data present on connections 6, 13, 14, 15, 16, 17 and combines them so as to create data words, each made up of data pertaining to a determined interval, which data will be present at the same time at RG1 inputs thanks to the insertion of suitable delay circuits into upstream blocks.

RG1 is synchronized by the interval-frequency signal it receives on wire 3, and supplies on output bus 18 the words composed in this way.

MEM1 denotes a random access memory which at each interval contains the last Z data words received from RG1. MEM1 performs in writing as a shift register for the words it receives from RG1 at the instants at which interval-frequency signal is active on wire 3; this signal acts as clock signal and as read/write signal. During reading, however, the access to MEM1 is random; the data read are supplied on bus 19 to block CLSS which generates the corresponding reading addresses on bus 20.

Circuit blocks examined till now operate in a synchronous mode ,with the data present on connection 2, and with a constant delay.

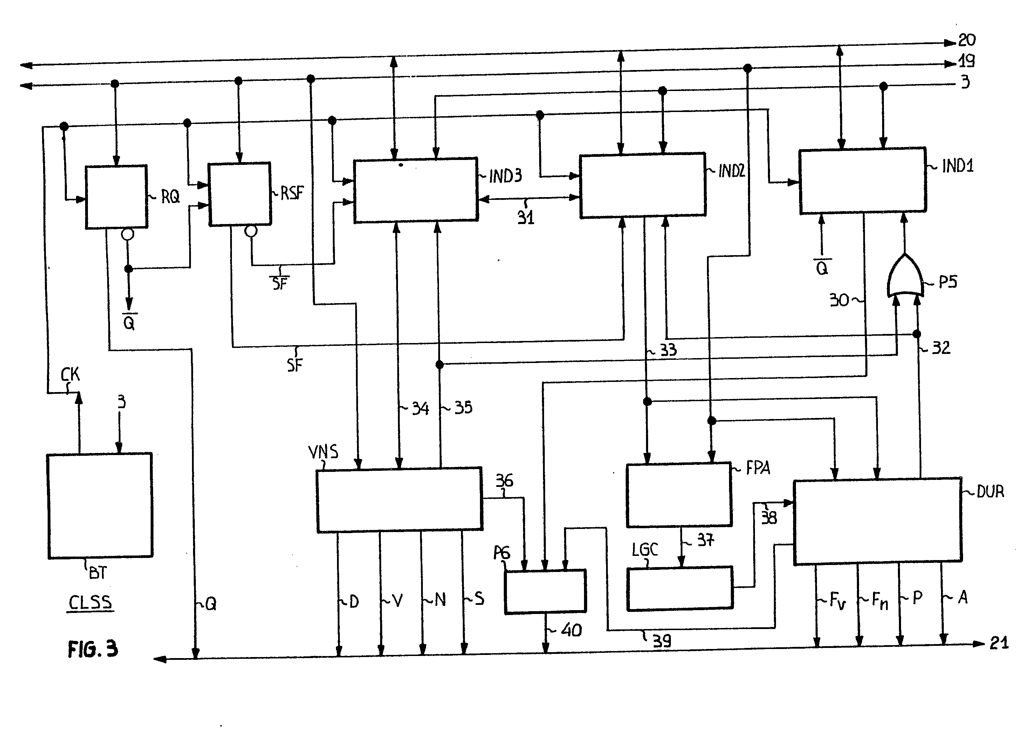

CLSS performs as a sound classifier according to the eight above-mentioned classes. The classification is performed starting from the analysis of the data words present in MEM1. The structure of block CLSS will be examined in detail with reference to Fig. 3.

ELB denotes a block designed to recongize word sequences. ELB comprises a memory of reduced sequences of classes, corresponding to vocabulary word sequences, a memory for values Fr, and a memory for the class sequences it receives from block CLSS on bus 21.

ELB comprises means for carrying out the tree-searches of pattern matching with sequences of memorized reduced classes, and means for performing the searches for acceptable reduced class sequences according to dynamic programming techniques.

The embodiment of block ELB is not a problem for the skilled in the art person once known the carried out functions investigated during the method description. ELB can be implemented with a knwon microprogrammable structure, provided its computing rate is compatible with real-time processing requirements.

Blocks CLSS and ELB work in an asynchronous mode.

In Fig. 2 CNT1 denotes a counter, synchronized by the interval-frequency signal on wire 3, which supplies an enabling signal on wire 25 till maximum counting values is reached.

SM1 denotes an adder which, during the intervals in which is enabled by the signal on wire 25, i.e. during the intervals of the operation beginning of the device of Fig. 1, adds value $E_T$ present on connection 9 to the content of register RG2 available on connection 26. Said content is the result of the addition performed by SM1 at the preceding interval. When the enabling on wire 25 is over, at RG2 output initial total energy value $E_{TI}$ will be present.

At each interval said value is subtracted in a subtractor SM2 from the value of total energy $E_T$ present on connection 9.

The subtraction result is supplied on connection 27 to multiplier ML1 which multiplies it by the constant value $\alpha$ available at the output of memory element MM.

The multiplication result is the value of reference energy $E_{RIF}$ which is supplied through connection 28 to an input of majority comparator CMP1 which compares it with the value of residual energy $E_R$ it receives at the second input from block RE (Fig.1) through

connection 5.

On output wire 17 of CMP1 a logic "1" is present if $E_R > E_{RIF}$ (condition corresponding to the classification of the interval as silence Q), otherwise a logic "0" will be present.

All the blocks of Fig. 2 are synchronized by interval-frequency signal present on wire 3.

In Fig. 3 reference RQ denotes a register reading from bus 19, carrying the data coming from memory MEM1 (Fig. 1), the field of each data word carrying the indication silence/voice. The indication of silence sets output Q, while the indication of voice sets output $\overline{Q}$.

RSF denotes a register reading from bus 19 the field of data words carrying information on whether spectral-stability threshold has been exceeded. When signal $\overline{Q}$ is active, RSF outputs are activated: more particularly, the "threshold exceeded" indication sets output SF, while the indication "threshold not exceeded" sets output $\overline{SF}$. Registers RQ, RSF are synchronized by clock signal CK.

IND1 denotes a first addressing unit for memory MEM1, allowing the reading of silence/voice field of the addressed words, which field is then memorized in RQ.

IND1 comprises an up/down programmable counter, which is synchronized by clock signal CK and which usually counts up; on the contrary when it receives a pulse on wire 3 it decrements the counting by one unit. In addition said counter is stopped when signal $\overline{Q}$ is active, and is programmed at the address value present on bus 20 when the output signal of OR gate P5 is active. IND1 emits as adresses on bus 20 the counting values, while at each counting increment it emits a pulse on wire 30.

IND2 denotes a second addressing unit for memory MEM1, which allows the reading of data word fields relating to identification of sounds Fv, Fn, P, A, which fields are supplied to blocks FPA and DUR through the respective wires of data bus 19.

IND2 comprises an up/down programmable counter, synchronized by clock signal CK, which emits the values counted on bus 20 as addresses for MEM1. Said counter begins counting up when output SF of RSF is set, provided the counter is not inhibited by a signal coming from block IND3 through bidirectional connection 31. On the contrary, when it receives a pulse on wire 2, decrements the counting by a unit.

At each activation the counter executes two consecutive countings: the first is an up counting by $2N+1$ units and starts from the value present on bus 20 at the activation instant decremented by $N$; the second counting starts from the value present on bus 20 at the activation instant and is incremented till an end-of-counting signal arrives on wire 32.

IND2 supplies block IND3 with an inhibition signal, through connection 31, during its operation. Moreover, it supplies on connection 33 the values counted to block FPA and to block DUR during the first and the second of the two consecutive countings, respectively; said values perform as synchronism signals for the operations of blocks FPA, DUR.

IND3 denotes a third addressing unit for memory MEM1, allowing the reading of the fields of the data words relevant to the identification of sounds V, N, S, which fields are supplied to block VNS through the corresponding wires of data bus 19.

IND3 comprises a programmable up/down counter, which is synchronized by clock signal CK and emits the values counted on bus 20 as addresses for MEM1. Said counter starts counting up when output $\overline{SF}$ of RSF is set, provided the counter is not inhibited by the inhibition signal supplied by IND2 on connection 31. As long as IND3 operates, it emits on the same connection 31 the inhibition signal for IND2 and on connection 34 the values counted, acting as activations for the operations of block VNS.

IND3, receives control signals for up or down counting or pause through connection 34 from block VNS, from which it also receives via wire 35 a signal of end-of-operation determining stopping of the counter. Also the counter of IND3 decrements the counting by a unit when it receives a pulse on wire 3.

VNS denotes a block carrying out the functions of identification of sounds V, N, S.

It receives through bus 19 the bits of the following fields of data words: silence Q, spectral stability threshold, values of formant frequencies Fr, values of smoothed mean-energy function $E'_M$ and relevant indications of maximum and minimum points.

VNS is activated by the signal received from block IND3 through connection 34, whereon it supplies also the control signals for the counter of IND3, and is synchronized by clock signal CK. VNS supplies on the outputs S, N, V, D the indications of semivowel, nasal, vowel, diphtong, respectively, and for each interval identified by one of said classes emits a pulse on wire 36. In addition it emits the end-of-operation signal on wire 35 which signal is carried to block IND3 and to an input of gate P5; said signal is generated in correspondence with the interval (and hence of the data word) in which signals Q or SF become active again.

VNS implementation is not a problem for the skilled in the art person, once its functions, discussed above as well as during the method description, are known.

VNS may be, e.g. implemented with a known type microprogrammed structure, provided its computing rate is compatible with real-time processing requirements.

FPA denotes a block checking the occurrence of conditions a, ...i, described in the method, for detecting sounds Fv, Fn, P, A. To this aim it receives the fields of data words present on bus 19, relevant to silence, comparisons with energy thresholds $E_1$, $E_2$, and voicing degrees; further it receives the values counted by IND2 via connection 33; FPA emits the indications of occurrence of conditions a,......,i on the homonymous wires on connection 37.

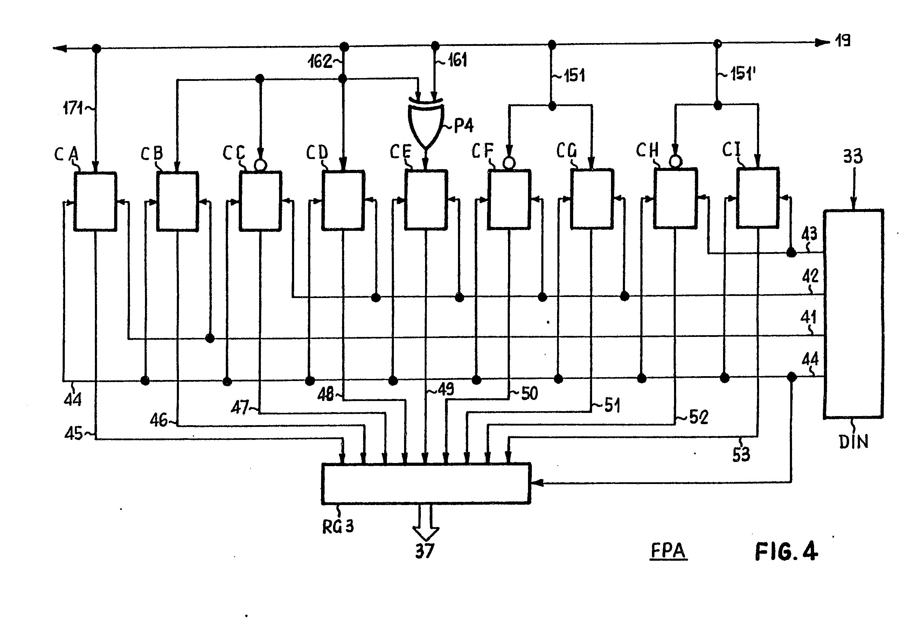

An example of embodiment of FPA will be described with reference to Fig. 4.

LGC denotes a combinatory logic emitting on connection 38 signals indicating voiced fricative (Fvl), unvoiced fricative (Fnl), plosive ($P_1$, $P_2$), affricate ($A_1$) class, combining the indications of occurrence of conditions a, ...i, it receives on connection 37 as indicated in the following truth table corresponding to the method described above of emission of phonetic-class indications:

| 37 | | | | | | | | | 38 | | | | |
|---|---|---|---|---|---|---|---|---|---|---|---|---|---|
| a | b | c | d | e | f | g | h | i | $F_{vl}$ | $F_{nl}$ | $P_1$ | $P_2$ | $A_1$ |
| 1 | 0 | 0 | 1 | 0 | 0 | 0 | 1 | 0 | 1 | 0 | 0 | 0 | 0 |
| 1 | 0 | 0 | 0 | 1 | 0 | 0 | 1 | 0 | 1 | 0 | 0 | 0 | 0 |
| 0 | 1 | 0 | 1 | 0 | - | - | - | - | 1 | 0 | 0 | 0 | 0 |
| 0 | 1 | 0 | 0 | 1 | - | - | - | - | 1 | 0 | 0 | 0 | 0 |
| 1 | 0 | 1 | 0 | 0 | 1 | 0 | 0 | 0 | 0 | 1 | 0 | 0 | 0 |
| 0 | 1 | 1 | 0 | 0 | - | - | - | - | 0 | 1 | 0 | 0 | 0 |
| 1 | 0 | 0 | 1 | 0 | 0 | 0 | 0 | 1 | 0 | 0 | 1 | 0 | 0 |
| 1 | 0 | 0 | 0 | 1 | 0 | 0 | 1 | 0 | 0 | 0 | 0 | 1 | 0 |
| 1 | 0 | 1 | 0 | 0 | 0 | 1 | 0 | 0 | 0 | 0 | 0 | 0 | 1 |

In the table, "1" indicates "condition occurred", "0" "condition not occurred", "-" "don't care". The plosive class indication is carried by two signals, $P_1$ relating to the type of plosive sound lasting one only interval, $P_2$ relating to the occurrence of condition e). By using the truth-table above, every skilled in the art person can implement block LGC.

The signals indicating classes coming from LGC, before being carried to block ELB (Fig. 1), are supplied to block DUR which determines the number of consecutive intervals identified by the class received by LGC through connection 38. DUR receives from bus 19 the same data as block FPA and from connection 33 the values counted by IND2. DUR, when enabled by IND2, emits the class indications on the outputs denoted by the same class symbol Fv, Fn, P, A on the basis of the corresponding class signals received from LGC; besides, it emits on wire 39 a pulse for each interval identified with that class. At the end of the operations, DUR emits a pulse on wire 32, which is connected to blocking input of IND2 and to a P5 input to restart IND1.

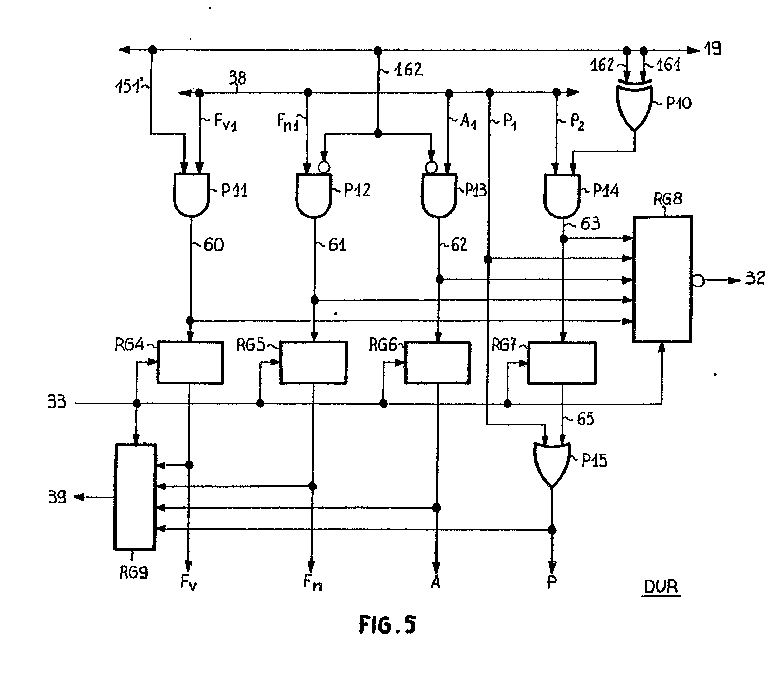

An example of embodiment of block DUR will be described in connection with Fig. 5.

The pulses present on wires 30, 36, 39 are combined by logic gate P6 so as to supply on wire 40 a pulse for each interval identified with any class.

BT denotes a conventional time base generating clock signal CK for all circuits of CLSS. BT is blocked during all the periods in which the signal on wire 3 is active, i.e. during the data writing phases in MEM1 (Fig. 1). Besides, at the beginning of the procedures BT remains blocked for a determined number of pulses present on wire 3.

The indications of classes of the outputs of RQ, VNS, DUR and the signal on wire 40 are supplied on bus 21 which is connected to block ELB (Fig. 1).

In Fig. 4 CA, CB,....., CI denote nine conventional counters checking conditions a, b, ...i, respectively.

Said counters, when enabled, count the pulses received from block DIN.

Enablings for the counters are obtained by the following combinations of the data present on bus 19:

- for counter CA, level "1" of voice/silence field on wire 171;

- for counters CB, CD level "1" of the higher—weight bit of the field of voicing degree over wire 162; for counter CC, instead, level "0" of said bit;

- for counter CE, logic EX—OR, executed in gate P4, of the two bits of the voicing—degree field present on wires 161, 162;

- for counters CF, CG logic levels "0" and "1" of the field of comparison of energy $E_T$ with threshold $E_1$, present on wire 151;

- for counters CH, CI logic levels "0" and "1" of the field of comparison of energy $E_T$ with threshold $E_2$, present on wire 151'.

DIN separates the counting pulses received through connection 33; over wire 41 it supplies the pulses from (j-N) to (j-1), where j is the value present on bus 20 (Fig. 3) at the beginning of IND2 counting; over wire 43 pulse j; over wire 42 pulses from (j+1) to (j+N).

Upon reception of pulse (j+N) DIN supplies on wire 44 an enabling signal which performs also as a reset signal for all the counters.

When enabled, counters CA, CB count the pulses on wire 41; counters CC, CD, CE, CF, CG those on wire 42; counters CH, CI those on wire 43.

Since on wire 43 a single pulse takes place, counters CH, CI, when enabled, supply it to the output on wires 52, 53 respectively.

Counters CA,...., CG instead supply a logic "1" on the output, on wires 45, 46, 47, 48, 49, 50, 51 respectively, if they reach counting value N/2+1, i.e., half plus 1 received pulses.

Signals on wires 45,...., 53 are applied to the inputs of register RG3 which supplies them on bus 37 when it receives the enabling signal on wire 44.

In Fig. 5, RG4, RG5, RG6, RG7 denote four registers which, when enabled by the pulses on wire 33 (pulses relevant to the second of the consecutive countings executed by block IND2 of Fig. 3), supply to the outputs the signal applied to the inputs, connected to wires 60, 61, 62, 63, respectively. Register outputs carry sound-class indications, and pulses on wire 33 determine the number of intervals during which said indications are valid.

Register RG4 supplies the indication of class Fv if and as long as the signal on wire 60 is active, which signal is supplied by the output of gate P11 executing the logic AND of signal $F_{v1}$, coming through bus 38 from logic LGC (Fig. 3), and of signal on wire 151° belonging to bus 19.

Register RG5 supplies the indication of class $F_n$ if and as long as the signal on wire 61 is active, which signal is supplied by the output of gate P12 which executes the logic AND of signal $F_{n1}$, coming from bus 38, and of the complement value of the signal on wire 162 coming from bus 19.

Register RG6 supplies the indication of class A, if and as long as the signal on wire 62 is active, which signal is supplied by the output of gate P13, which executes the logic AND of signal $A_1$, coming from bus 38, and of the complement value of signal on wire 162.

Register RG7 supplies on wire 65 one of the two possible indications of plosive sound if and as long as the signal on wire 63 is active, which signal is supplied by the output of gate P14 which executes the logic AND of signal P2, coming from bus 38, and of the output of gate P10, which executes the logic EX-OR of signals on wires 161, 162 coming from bus 19.

Signal $P_1$ coming from bus 38, and the signal on wire 65 are supplied to OR gate P15 which emits the indication of class P.

The signals on wires 60, ...., 63, and signal $P_1$ are applied to the inputs of register RG8, synchronized by the pulses on wire 33. RG8 emits a signal on wire 32, active when input signals are no longer active.

The signal on wire 32, when active, stops the counter of IND2, emitting the pulses on wire 33.

The signals of class Fv, Fn, A, P, are also carried to the inputs of register RG9, which emits on wire 39 the pulses present on wire 33 when one of the indications of such classes is active.

The operation of circuit CLSS of Fig. 3 will be now described.

At the beginning of the procedures time base BT generates signal CK with a delay of a certain number of intervals so as to allow an initial partial filling of data-word memory MEM1 (Fig. 1).

Then, the counter of IND1 begins addressing MEM1: as long as

the silence/voice field of data words indicates silence, register RQ supplies indication Q on bus 21, to which IND1 counting pulses are also supplied through wire 30, gate P6 and wire 40, which pulses determine the number of intervals characterized by class Q. All the other circuits of CLSS remain deenergized.

When, on the contrary, the silence/voice field indicates voice, output $\overline{Q}$ of RQ activates register RSF and stops unit IND1: if spectral-stability of data word present on bus 19 indicates spectral stability threshold exceeded, the output SF will be active and will activate addressing unit IND2; otherwise output $\overline{SF}$ will be active and will activate addressing unit IND3.

If unit IND2 is activated, then the search for sounds Fv, Fn P, A begins. IND2 inhibits IND3 through the signal on connection 31, up to the end of the search. IND2 counter addresses data words in MEM1 from position (j-N) to (j+N) where j is the address present on bus 20 upon IND2 activation; data words are supplied to circuits FPA and LGC activated by the first counting sequence supplied on connection 33. At the end of said first sequence, a combination of conditions a, ...i, decoded by LGC into one of the possible class indications supplied on bus 38, is present on output bus 37 of FPA.

Then circuit DUR is energized by the second counting sequence supplied by IND2 on connection 33. As long as DUR is active, it emits one of classes Fv, Fn, P, A on bus 21, on the basis of the analysis of the data words present on bus 19, and emits in addition on wire 39 the pulses of the second counting of IND2, which pulses determine the number of intervals identified by the relevant class, and are supplied on bus 21, through gate P6 and wire 40.

When DUR detects the end of the class found out, it stops IND2 counting by a signal on wire 32, which determines also reactivation of IND1 which begins again addressing MEM1 (Fig. 1) from the value present on bus 20 at that instant. Operation control is then taken again by register RQ as disclosed above. When output $\overline{Q}$ is

active, RSF is activated again, and IND1 is stopped. When output $\overline{SF}$ is active, addressing unit IND3 is activated. IND3 inhibits IND2 through connection 31 till the operation end, activates block VNS through the signal on connection 34, and addresses MEM1 starting from the address present at the activation on bus 20. The addressed data words are supplied to VNS which, on the basis of their analysis, emits the indications of classes V, N, S, and of dipthong D on bus 21; VNS emits also the pause or down/up control signals for IND3 counter on connection 34 and the pulses indentifying the intervals classified V, N, S on wire 36 connected to bus 21 through gate P6 and wire 40.

When VNS detects the presence of class Q or spectral stability threshold exceeded, it stops IND3 and reactivates IND1 through the signal on wire 35. Control is then taken again by unit IND1, as already described.

It is worth noting that active logic level on wire 3 (which condition occurs at each writing in MEM1 of a new data word) determines the temporary stopping of time base BT and consequently of all synchronized circuits of CLSS; besides in the addressing units it causes the decrement by a unit in the counter active at that instant to take into account the shift by a position of data words in MEM1, caused by the new writing.

Variations and modifications could be made to the example of embodiment described while remaining within the scope of the invention.

0173986

## Claims

1. Method of recognition of connected words belonging to small vocabularies providing for an initial step wherein a speech signal is digitized and is subdivided into intervals, in each interval an acoustic-phonetic analysis being made comprising : a linear-prediction encoding to calculate a normalized residual energy $E_R$, formant frequencies Fr and an autocorrelation function of residual signal $R_X$, wherefrom a first indication of voiced or unvoiced signal is extracted, depending on whether $R_X$ is greater or less than a threshold; a Fast Fourier Transform to calculate a total energy $E_T$, a low-frequency energy $E_L$, an intermediate frequency energy $E_M$, and a high-frequency energy $E_H$ wherefrom a value of spectral stability function SSF is calculated; providing also for an intermediate phase comprising the analysis of the trend of said intermediate frequency energy $E_M$ and of said formant frequencies Fr, so as to assign to interval sequences a division into nasal, semivowel, vowel classes with an indication of presence of dipthongs; providing also an end phase during which said word recognition is performed by analyzing a sequence of phonetic indications obtained during said intermediate phase by tree search algorithms of pattern matching of phonetic indications sequences, and dynamic programming, characterized in that said sequence of phonetic indications consists only of a subdivision of the total sequence of intervals into phonetic classes comprising said nasal, semivowel, vowel classes with diphtong presence, and silence, voiced fricative, unvoiced fricative, plosive, affricate classes; said silence class being detected during intervals in which said normalized residual energy $E_R$ exceeds a value of reference energy $E_{RIF}$ calculated on the basis of said total energy $E_T$; the beginning of one of said fricative, plosive, affricate classes being detected in the interval in which said spectral stability function exceeds a spectral stability threshold, their identification being executed by analyzing, in a number of intervals (-N, +N) preceding and following the interval of said beginning, the presence of silence class, the comparison of said total energy $E_T$ with energy thresholds ($E_1$, $E_2$), and a subdivision into four voicing degrees of said intervals.

2. Method according to claim 1, characterized in that said value of reference energy $E_{RIF}$ is given by the following formula:

$$E_{RIF} = \alpha(E_T - \overline{E_{TI}})$$

where $\alpha$ is a constant, $E_T$ is said total energy, $\overline{E_{TI}}$ is a mean total energy extending over a number of initial intervals.

3. Method according to claim 1 or 2, characterized in that a ratio R between low frequency and high frequency energy $E_L$, $E_H$ is calculated and then compared with a threshold, and said voicing degrees are:

- voiced, if said first indication is of a voiced sound and said ratio exceeds the threshold;
- quasi-voiced, if the first indication is of unvoiced sound and said ratio exceeds the threshold;
- quasi-unvoiced, if the first indication is of voiced sound and said ratio does not exceed the threshold;
- unvoiced, if the first indication is of unvoiced sound and said ratio does not exceed the threshold.

4. Method according to claim 3, characterized in that a voiced fricative class is identified if most of said preceding intervals have been classified as silence, said total energy is less than a first of said energy thresholds ($E_2$) in the interval of beginning, and most of the subsequent intervals have been assigned either a voiced or quasi-voiced degree, or quasi-voiced or quasi-unvoiced degree; or even if most of the preceding intervals have been assigned a voiced or quasi-voiced degree, and most of the subsequent ones either a voiced or quasi-voiced degree, or quasi-voiced or quasi-unvoiced degree; said voiced fricative class lasting up to the interval in which total energy $E_T$ exceeds said first threshold.

5. Method according to claim 3 or 4, characterized in that an unvoiced fricative class is identified if most of the subsequent intervals have been assigned an unvoiced or quasi-unvoiced degree, and if most of the preceding intervals have been assigned a voiced or quasi-voiced degree or the silence class, and in most of the subsequent intervals the total energy $E_T$ is less than a second of said energy thresholds ($E_1$), said unvoiced fricative class lasting up to the interval which is assigned the voiced or quasi voiced degree.

6. Method according to any of claims 3 to 5, characterized in that a plosive class is identified if most of the preceding intervals have been assigned a silence class, during the interval of beginning the total energy is greater than the first energy threshold ($E_2$), and if most of the subsequent intervals have been assigned voiced or quasi-voiced degree, said plosive class identifying the interval of beginning alone, or, if quasi-voiced or quasi-unvoiced degree has been allotted, said subsequent intervals.

7. Method according to any of claims 3 to 6, characterized in that an affricate class is identified if most of the preceding intervals have been assigned the silence class, the subsequent intervals unvoiced or quasi-unvoiced degree, and in most of the subsequent intervals total energy is greater than said second energy threshold ($E_1$), said affricate class lasting until the interval which is reallot ted the voiced or quasi-voiced degree.

8. Device for implementing the method of any claim from 1 to 7, comprising an analog-to-digital converter (AD) of the speech signal subdivided into intervals, a circuit (LPC) for computing linear prediction coefficients ($a_i$, $\rho_i$) relevant to digital samples of each interval, followed by circuits for computing said normalized residual energy $E_R$, said formant frequencies Fr, said autocorrelation function of the residual signal $R_x$ and said first

indication of voiced or unvoiced sound, a circuit (FFT) for calculating the Fast Fourier Transform of digital samples of each interval, followed by a circuit (CEN) for computing said total, low-frequency, intermediate-frequency and high-frequency energies ($E_T$, $E_L$, $E_M$, $E_H$), a circuit (SSF) for computing said spectral stability function, emitting a signal (13) indicating whether said spectral stability threshold has been exceeded, a circuit (SMOT) for determining the values of a smoothed intermediate-frequency energy function $E'_M$, and of its maxima and minima, and a processing circuit (ELB) for said end phase, characterized in that it further comprises:

- a circuit (SIL) for detecting said silence class, which receives the values of residual energy $E_R$ and total energy $E_T$; computes said reference energy $E_{RIF}$ and compares it with said residual energy $E_R$;

- a circuit (VNV) determining said subdivision into four voicing degrees, on the basis of said first indication of voiced or unvoiced sound, and of the computation of said ratio between the energies at low and high frequencies $E_L$, $E_H$;

- a circuit (COMP) for the comparison of said total energy $E_T$ with said first and second energy thresholds ($E_1$, $E_2$);

- a first register (RG1) for combining data words, one per each interval, composed of said silence class, said formant frequencies Fr, said voicing degrees, said signal outgoing from said circuit (COMP) for the total energy comparison, the signal indicating whether the spectral energy threhsold has been exceeded, the values of the smoothed intermediate-frequency energy function $E'_M$ and maximum and minimum indications;

- a memory (MEM1) for the temporary storage of the last M data words;

- a circuit (CLSS) for determining said phonetic classes upon the analysis of said data words it receives via a data bus (19) form said memory (MEM1), which it supplies with the addresses on an address bus (20), said classes being supplied to said processing circuit (ELB) for the end phase, with a signal for the interval identification.

9. Device as in claim 8, characterized in that said circuit (CLSS) for determining the phonetic classes essentially comprises:

- a first unit (IND1) for the sequential addressing of said memory (MEM1) during the reading, said first unit being stop ped by a voice signal $(\overline{Q})$, and restarted from the value present on the address bus (20) of said memory by a first recovery signal, and supplying, when active, a sequence of pulses of interval identification;

- a second unit (IND2) for the sequential adressing of said memory (MEM1) during reading, said second unit carrying out at each activation a first and a second addressing and disabling a third unit (IND3), the first addressing beginning from N positions before the address present at the activation on said address bus (20) and addressing 2N+1 subsequent positions, the second addressing starting from said address present at the activation on the address bus (20) and ending when said second unit receives a second inhibiting signal (32);

- said third unit (IND3) addressing during reading said memory (MEM1) starting, at each activation, from the address present on said address bus (20), disabling said second unit (IND2) and being stopped by a third inhibiting signal (35);

- a second register (RQ), which temporarily stores and supplies to the output a field of said data words, read in said memory (MEM1), carrying the silence class (Q) or said voice signal $(\overline{Q})$, said silence class being supplied to said processing circuit (ELB) for the end phase;

- a third register (RSF) which, when activated by said voice signal $(\overline{Q})$, temporarily stores a field of said data words, read in the memory (MEM1), carrying said signal indicating whether said spectral stability threshold has been exceeded, and supplies to the output the activation signal (SF, $\overline{SF}$), for said second (IND2) or said third (IND3) unit depending on whether said field indicates threshold exceeded or not exceeded threshold;

- a circuit (VNS) for determining nasal, semivowel, vowel classes and the presence of diphtongs on the basis of the analysis of the fields of said data words present on the data bus (19) carrying said formant frequencies Fr and the values of the smoothed intermediate-frequency energy function $E'_M$ and the indications of maxima and minima, said circuit (VNS) being activated when said third unit (IND3) is activated and supplying it with the control signals relevant to the memory (MEM1) addressing, also supplying a sequence of pulses identifying intervals, and being disabled when in a data word there is present again said silence class or the indication of spectral stability threshold exceeded, thus supplying said third inhibiting signal (35); said nasal, semivowel, vowel classes and diphtong presence being supplied to said processing circuit (ELB) for the end phase;

- a first logic circuit (FPA) which generates condition signals (37) for the identification of fricative, plosive, affricate classes, on the basis of the analysis of the fields of said data words present on the data bus (19), carrying the silence class, voicing degrees, the comparisons of the total energy with said first and second threshold $(E_2, E_1)$; said first logic circuit being activated by said first addressing supplied by the second unit (IND2);

- a combinatory logic (LGC) of said condition signals (37), emitting an identification signal (38) of voiced-fricative or unvoiced fricative, or plosive or affricate classes;

- a second logic circuit (DUR) for determining the number of intervals labelled by fricative, plosive, affricate classes, which receives said identification signal (38) from said combinatory logic, the fields of said data words carrying voicing degrees and the comparisons of the total energy with the thresholds, which is activated by said second addressing supplied by said second unit (IND2), which supplies one of said fricative, plosive, affricate classes to said processing circuit (ELB) for the end phase, and also supplies a sequence of pulses identifying the intervals, and, at the end of the sequence, said second inhibiting signal (32) and said third inhibiting signal (35) being also said first recovery signal;

- a logic gate (P6) supplying said signal (40) for interval identification to the processing circuit (ELB) for the end phase on the basis of the sequences of pulses identifying the intervals it receives from the first unit (IND1), from the circuit (VNS) for the determination of nasal, semivowel and vowel classes, and from said second logic circuit (DUR).

10. Device as in claim 9, characterized in that said first logic circuit (FPA) basically comprises:

- a first counter (CA) of the number of preceding intervals in which the silence class is present;

- a second counter (CB) of the number of preceding intervals having a voiced or quasi-voiced degree;

- a third counter (CC) of the number of subsequent intervals having an unvoiced or quasi-unvoiced degree;

- a fourth counter (CD) of the number of subsequent intervals having a voiced or quasi-voiced degree;

- a fifth counter (CE) of the number of subsequent intervals having a quasi-voiced or quasi-unvoiced degree;

- a sixth and a seventh counters (CF, CG) of the number of subsequent intervals in which total energy $E_T$ does not exceed or exceeds respectively said second threshold ($E_1$);

said first to seventh counters supplying an active logic level when exceeding half the maximum counting value;

- an eigth and ninth counters (CH, CI) which supply an active logic level if in said initial interval the total energy $E_T$ is respectively less or greater than said first threshold ($E_2$);

- a circuit (DIN) allotting the pulses of said first addressing to said counters as synchronism signals;

- a fourth register (RG3) which receives the outputs of said counters and supplies them on the output as condition signals (37) at the end of said first addressing.

11. Device as in claim 10, characterized in that said combinatory logic (LGC) emits:

- a signal of voiced-fricative class (Fvl) if the outputs are active of the following counters: first and fourth and eight, or first and fifth and eight, or second and fourth or yet second and fifth;

- a signal of unvoiced-fricative class (Fnl) if the outputs are active of the following counters: first and third and sixth, or second and third;

- a first signal of plosive class ($P_1$) if the outputs of said first, fourth and ninth counters are active;

- a second signal of plosive class ($P_2$) if the outputs of said first, fifth and eight counters are active;

- a signal of affricate class ($A_1$) if the outputs of said first, third and seventh counters are active.

12. Device as in claim 11, characterized in that said second logic circuit (DUR) essentially comprises:

- a fifth register (RG4) which emits said voiced-fricative class ($F_v$) if it receives said signal of voiced-fricative class ($F_{v1}$) and as long as total energy $E_T$ is less than said first threshold ($E_2$);

- a sixth register (RG5) which emits said unvoiced-fricative class ($F_n$) if it receives said signal of unvoiced-fricative class ($F_{n1}$) and as long as the unvoiced or quasi-unvoiced degree is present;

- a seventh register (RG6) which emits said affricate class (A) if it received said affricate class signal ($A_1$) and as long as unvoiced or quasi-unvoiced degree is present;

- an eighth register (RG7) which emits an active logic level if it receives said second signal of plosive class ($P_2$) and as long as the quasi-voiced or quasi-unvoiced degree is present; said fifth, sixth, seventh, eighth registers being synchronized by the pulses of said second addressing;

- a logic gate (P15) which emits said plosive class (P) if the output of said eighth register (RG7) is active or if it receives said first signal of plosive class ($P_1$);

- a ninth register (RG9) which supplies the pulses of said second addressing (39) as a sequence indentifying the intervals if and as long as one of said fricative, plosive, affricate classes is present;

- a tenth register (RG8) which emits said second inhibiting signal (32) when said fifth, sixth, seventh, eighth registers are disabled.

FIG. 1

FIG. 2

FIG. 3

FIG. 4

FPA

FIG.5

5/5

0173986